# EUROPÄISCHE PATENTSCHRIFT

(11) **EP 2 657 675 B1**
(45) Veröffentlichungstag und Bekanntmachung des Hinweises auf die Patenterteilung: **05.07.2017**
(21) Anmeldenummer: 13163956.9
(22) Anmeldetag: 16.04.2013
(51) Int. Cl.: G01N 1/02

(54) **Spürvorrichtung, Fahrzeug und Verfahren zum Betrieb einer Spürvorrichtung**
Track device, vehicle and method for operating a track device
Dispositif de traçage, véhicule et procédé de fonctionnement d'un dispositif de traçage

(30) Priorität: 25.04.2012 DE 102012103616
(43) Veröffentlichungstag der Anmeldung: 30.10.2013
(73) Patentinhaber: Krauss-Maffei Wegmann GmbH & Co. KG, 80997 München (DE)
(72) Erfinder: Weber, Jürgen, 50321 Brühl (DE); Keil, Norbert, 80997 München (DE); Lietz, Roland, 80997 München (DE)
(74) Vertreter: Feder Walter Ebert

(56) Entgegenhaltungen:
- EP-A2- 2 221 572
- CA-A1- 2 289 414
- US-A- 3 841 973
- US-A- 5 437 203
- US-A- 5 517 026

## Beschreibung

Die Erfindung betrifft eine Spürvorrichtung zur Anordnung an einem Fahrzeug mit einem bewegbaren Spürarm sowie ein Fahrzeug mit einer derartigen Spürvorrichtung. Einen weiteren Gegenstand der Erfindung bildet ein Verfahren zum Betrieb einer solchen Spürvorrichtung.

Spürvorrichtungen werden bei zivilen und militärischen Fahrzeugen eingesetzt, um beispielsweise Schad- oder Kampfstoffe in der Umgebung des Fahrzeugs aufspüren und nachweisen zu können.

Ein derartiges Spürfahrzeug mit einer Spürvorrichtung ist aus der EP 2 278 592 A1, CA 2 289 414 A1 und US 5 517 026 A bekannt. Die Spürvorrichtung weist einen bewegbaren Spürarm auf, welcher es nach Art eines Greifers ermöglicht, Materialproben aus der Umgebung des Fahrzeugs aufzunehmen, um diese einer Analysevorrichtung zuzuführen. Aus der DE 10 2009 015 828 A1 ist ein Fahrzeug mit einer Spürvorrichtung bekannt, deren bewegbarer Spürarm eine Sonde aufweist, über welche Materialproben zunächst verdampft und dann in verdampfter Form aufgenommen und analysiert werden können.

Bei diesen Spürvorrichtungen ist es nach Abschluss jedes Spürvorgangs erforderlich, den Spürarm zur Vorbereitung des nächsten Spürvorgangs zu reinigen, um zu verhindern, dass die Ergebnisse weiterer Spürvorgänge durch an dem Spürarm anhaftende Rückstände, wie etwa kontaminierte Staubpartikel, verfälscht werden. Zur Reinigung der Spürvorrichtungen werden häufig Dekontaminationsvorrichtungen verwendet, wie diese in der EP 2 278 592 A1 beschrieben sind. Bei diesen Vorrichtungen wird über eine außen an dem Fahrzeug angeordnete Düse ein Dekontaminationsmittel in Richtung des Spürarms gesprüht um zumindest jene Bereiche der Spürvorrichtung, welche in Kontakt mit der zuletzt untersuchten Materialprobe standen, zu reinigen. Hierbei hat sich jedoch als negativ herausgestellt, dass auch nach ggf. mehrfacher Durchführung eines entsprechenden Dekontaminationsvorgangs besonders hartnäckige Rückstände oftmals an dem Spürarm verbleiben, so dass auch nach Einsatz der Dekontaminationsvorrichtung die Gefahr einer Verfälschung weiterer Spürvorgänge besteht.

Vor diesem Hintergrund stellt sich die Erfindung die Aufgabe, eine Vorrichtung wie auch ein Verfahren anzugeben, bei welchen selbst bei sehr hartnäckigen Rückständen Verfälschungen nachfolgender Spürergebnisse nicht möglich sind.

Gelöst wird diese Aufgabe bei einer Spürvorrichtung zur Anordnung an einem Fahrzeug mit einem bewegbaren Spürarm, wobei der Spürarm als Einweg-Spürarm ausgebildet ist und eine Schnittstelle zur austauschbaren Anbindung des Spürarms an das Fahrzeug aufweist, dadurch gekennzeichnet, dass der Spürarm im Bereich der Schnittstelle eine Schutzhülle aufweist, die derart ausgebildet ist, dass sie beim Anbinden des Spürarms durchtrennt wird. Durch die Ausbildung des Spürarms als Einweg-Spürarm kann dieser nach jedem Spürvorgang gegen einen gleichartigen, sauberen Einweg-Spürarm ausgewechselt werden. Es ist nicht erforderlich, den Einweg-Spürarm nach Abschluss eines Spürvorgangs zu dekontaminieren. Vielmehr kann der Einweg-Spürarm von der Spürvorrichtung gelöst werden und durch einen nicht kontaminierten Einweg-Spürarm ersetzt werden. Es ist daher nicht möglich, dass die Ergebnisse eines Spürvorgangs durch vorhergehende Spürvorgänge beeinträchtigt bzw. verfälscht werden.

Gemäß einer vorteilhaften Ausgestaltung weist die Spürvorrichtung eine Schnittstelle zur austauschbaren Anbindung des Spürarms an das Fahrzeug auf. Über die Schnittstelle kann eine mechanische Verbindung des Einweg-Spürarms mit der Spürvorrichtung hergestellt werden. Die Schnittstelle kann nach Art einer Schnellspannvorrichtung oder als elektromagnetische Aufnahme ausgebildet sein, so dass es möglich ist, den Einweg-Spürarm ohne zusätzliches Werkzeug in die Schnittstelle einzusetzen.

In diesem Zusammenhang hat es sich ferner als vorteilhaft herausgestellt, wenn die Schnittstelle Mittel zur Versorgung des Spürarms mit elektrischer Energie aufweist. Elektrisch betriebene Bauteile des Spürarms, wie beispielsweise elektrische Antriebe können daher über die Schnittstelle mit Energie versorgt werden.

Ferner können Mittel zur Versorgung des Spürarms mit einem Gas und/oder einer Flüssigkeit an der Schnittstelle vorgesehen sein. Über die Schnittstelle lassen sich daher auch Gase und/oder Flüssigkeiten in den Spürarm einleiten.

Darüber hinaus können Mittel zur Steuerung des Spürarms an der Schnittstelle vorgesehen sein, so dass die Steuerung des Spürarms beispielsweise aus dem Fahrzeug heraus erfolgen kann.

Besonders vorteilhaft ist es, wenn die vorstehend genannten Mittel derart ausgebildet sind, dass eine elektrische und/oder mechanische Verbindung bei der mechanischen Anbindung des Spürarms selbststätig hergestellt wird. Die Mittel können als Steckverbindungen ausgeführt sein, welche bei der mechanischen Festlegung des Spürarms miteinander verbunden werden, so dass es nicht erforderlich ist, dieser Verbindung im Anschluss an die mechanische Anbindung des Spürarms an das Fahrzeug in einem weiteren Schritt herzustellen. Der Spürarm weist im Bereich der Schnittstelle eine Schutzhülle auf, die derart ausgebildet ist, dass sie beim Anbinden des Spürarms durchtrennt wird. Durch eine derartige, beispielsweise nach Art eines durchstechbaren Klebestreifens ausgebildeten Schutzhülle kann verhindert werden, dass die Schnittstelle des Einweg-Spürarms kontaminiert wird, bevor sie an die Spürvorrichtung angebunden wird. Erst unmittelbar vor der Anbindung des Spürarms wird die Schutzhülle durchtrennt, wodurch die Gefahr von Verfälschungen minimiert wird.

Vorteilhaft ist es ferner, wenn der Spürarm einen Reinbereich aufweist, der von einer Schutzhülle umgeben ist. Der Reinbereich ist jener Bereich, welcher während des Spürvorgangs in Kontakt mit der zu untersuchenden Materialprobe gelangt. Durch die Schutzhülle kann der Reinbereich vor verfälschenden Kontaminationen geschützt werden. Bevorzugt herrscht ein Überdruck in der Schutzhülle, durch welchen beispielsweise kontaminierte Staubpartikel aus dem Reinbereich gehalten werden.

Ferner ist es möglich, dass der Einweg-Spürarm eine Schutzhülle aufweist, welche die Schnittstelle und den Reinbereich gemeinsam umgibt, so dass es nicht erforderlich ist, mehrere Schutzhüllen an dem Einweg-Spürarm anzuordnen.

Gemäß einer bevorzugten Ausgestaltung weist die Schutzhülle eine Sollbruchstelle auf. Durch die Sollbruchstelle kann ein definiertes Aufreißen der Schutzhülle an einer vorgegebenen Stelle ermöglicht werden.

Der Spürarm kann unterschiedliche Vorrichtungen zur Aufnahme von Spürproben aufweisen. Bevorzugt ist es, wenn der Spürarm eine Greifeinreichung zum Greifen von Spürproben aufweist. Die Greifeinrichtung kann mehrere Greifelemente nach Art von Fingern aufweisen. Spürproben können mit der Greifeinrichtung aufgenommen werden und in eine Spürprobenaufnahme oder zu einem Sensor oder einer Sonde verbracht werden.

Besonders bevorzugt ist die Greifeinrichtung im Reinbereich des Spürarms angeordnet. Auf diese Weise kann eine Greifeinrichtung mit definierter Reinheit bereitgestellt werden. Ferner kann die den Reinbereich umgebende Schutzhülle mittels der Greifeinrichtung zerrissen werden, beispielsweise dadurch, dass die Greifeinrichtung von einer Ruhestellung, in welcher die Greifelemente der Greifeinrichtung eine kompakte Stellung einnehmen, in eine Betriebsstellung verbracht wird, in welcher die Greifelemente der Greifeinrichtung gespreizt sind.

Die Aufnahme von Materialproben kann auch auf andere Weise erfolgen. Gemäß einer weiteren vorteilhaften Ausgestaltung weist der Spürarm einen Sensor und/oder eine Sonde zur Detektion von Kontaminationen auf. Mit einem Sensor oder einer Sonde können Messungen direkt an der Materialprobe durchgeführt werden. Es ist daher nicht erforderlich, die Materialprobe zunächst mit einer Greifeinrichtung aufzunehmen und anschließend einem Sensor und/oder einer Sonde zuzuführen.

Vorteilhaft ist es ferner, wenn der Spürarm einen Auslass aufweist, über welchen ein Gasdruckstoß abgebbar ist. Über einen Gasdruckstoß kann staubförmiges Material aufgewirbelt werden.

Bevorzugt ist der Auslass im Reinbereich des Spürarms angeordnet, so dass die den Reinbereich umgebende Schutzhülle mittels eines Gasdruckstoßes entfernt werden kann. Hierzu kann mittels des Auslasses ein Überdruck innerhalb der Schutzhülle erzeugt werden, welcher die Schutzhülle zum Aufreißen veranlasst.

Darüber hinaus kann der Spürarm einen Auslass aufweisen, über welchen ein Dekontaminationsmittel abgebbar ist. Über einen derartigen Auslass können Gegenstände außerhalb des Fahrzeugs gereinigt und von Kontaminationen befreit werden. Optional kann der Auslass über welchen ein Gasdruckstoß abgebbar ist auch zum Ausgeben des Dekontaminationsmittels verwendet werden, so dass lediglich ein gemeinsamer Auslass für Gase und Flüssigkeiten erforderlich ist.

Bei einem Fahrzeug der eingangs genannten Art wird die oben genannte Aufgabe dadurch gelöst, dass der Spürarm als Einweg-Spürarm ausgebildet ist.

Durch die Ausbildung des Spürarms als Einweg-Spürarm kann dieser nach jedem Spürvorgang gegen einen gleichartigen, sauberen Einweg-Spürarm ausgewechselt werden. Es ist nicht erforderlich, den Einweg-Spürarm nach Abschluss eines Spürvorgangs zu dekontaminieren. Vielmehr kann der Einweg-Spürarm von der Spürvorrichtung gelöst werden und durch einen nicht kontaminierten Einweg-Spürarm ersetzt werden. Es ist daher nicht möglich, dass die Ergebnisse eines Spürvorgangs durch vorhergehende Spürvorgänge beeinträchtigt bzw. verfälscht werden.

Bei dem Fahrzeug können sämtliche der zuvor beschriebenen Merkmale der Spürvorrichtung einzeln oder in Kombination zur Anwendung kommen.

In Ausgestaltung des Fahrzeugs weist dieses ein an dessen Außenkontur angeordnetes Magazin zur Lagerung mehrerer Spürarme auf. In dem Magazin können mehrere Einweg-Spürarme bevorratet werden, um diese für die jeweiligen Spürvorgänge nach und nach zu entnehmen.

In diesem Zusammenhang hat es sich als vorteilhaft erwiesen, wenn das Fahrzeug eine Wechselvorrichtung zum Wechseln des Spürarms aufweist. Über die Wechselvorrichtung kann der Einweg-Spürarm automatisch gegen einen anderen Einweg-Spürarm ausgewechselt werden. Es ist nicht erforderlich, die Spürarme manuell auszuwechseln. Das Auswechseln der Spürarme kann mit Hilfe der Wechselvorrichtung in kontaminierter Umgebung erfolgen. Der Wechsel kann dabei ferngesteuert aus dem geschützten Fahrzeuginnenraum erfolgen, ohne dass ein Besatzungsmitglied das Fahrzeug verlassen und sich ggf. gegnerischen Kampfstoffen o.ä. aussetzen muss.

Besonders vorteilhaft ist es, wenn das Fahrzeug zwei Spürvorrichtungen aufweist. Die Spürarme der beiden Spürvorrichtungen können jeweils als Wechselvorrichtung für den anderen Spürarm genutzt werden, so dass es nicht erforderlich ist, eine gesonderte Wechselvorrichtung vorzusehen. Der Einweg-Spürarm einer ersten Spürvorrichtung kann mittels des Einweg-Spürarms der zweiten Spürvorrichtung, der für den vorhergehenden Spürvorgang genutzt wurde, ausgewechselt werden. Hierzu kann das Fahrzeug zwei Schnittstellen aufweisen. Die Aufgabe wird durch ein Verfahren zum Betrieb einer an einem Fahrzeug angeordneten Spürvorrichtung mit einem bewegbaren Spürarm und einer Schnittstelle zur austauschbaren Anbindung des Spürarms an das Fahrzeug gelöst, wobei der Spürarm als Einweg-Spürarm ausgebildet ist, der gegen einen gleichartigen Einweg-Spürarm ausgewechselt wird, und dadurch gekennzeichnet wird, dass der Spürarm im Bereich der Schnittstelle eine Schutzhülle aufweist, die beim Anbinden des Spürarms durchtrennt wird. Der Einweg-Spürarm kann nach jedem Spürvorgang gegen einen gleichartigen, sauberen Einweg-Spürarm ausgewechselt werden. Es ist nicht erforderlich, den Einweg-Spürarm nach Abschluss eines Spürvorgangs zu dekontaminieren. Vielmehr kann der Einweg-Spürarm von der Spürvorrichtung gelöst werden und durch einen nicht kontaminierten Einweg-Spürarm ersetzt werden. Es ist daher nicht möglich, dass die Ergebnisse eines Spürvorgangs durch vorhergehende Spürvorgänge beeinträchtigt bzw. verfälscht werden.

Die im Zusammenhang mit der erfindungsgemäßen Spürvorrichtung und dem erfindungsgemäßen Fahrzeug beschriebenen Merkmale können einzeln oder in Kombination auch bei dem Verfahren zur Anwendung kommen.

Eine besonders vorteilhafte Ausgestaltung des Verfahrens sieht vor, dass der Spürarm aus einer Magazinstellung, in welcher der Spürarm in einem Magazin angeordnet ist, in eine Spürstellung überführt wird, in welcher der Spürarm zum Spüren verwendbar ist. Der Spürarm kann in der Spürstellung an die Spürvorrichtung angebunden und aus dem Fahrzeuginneren fernbedienbar sein. Bevorzugt erfolgt die Überführung aus der Magazinstellung in die Spürstellung automatisch, so dass keine manuellen Tätigkeiten an der Spürvorrichtung erforderlich sind. Besatzungsmitglieder brauchen das geschützte Fahrzeuginnere nicht zu verlassen.

Ferner ist es bevorzugt, wenn das Fahrzeug zwei Spürvorrichtungen aufweist, wobei ein Spürarm einer ersten Spürvorrichtung mittels des Spürarms einer zweiten Spürvorrichtung ausgetauscht wird. Der Spürarm der zweiten Spürvorrichtung kann als Wechselvorrichtung zum Wechseln des Spürarms der ersten Spürvorrichtung verwendet werden. Es ist nicht erforderlich, weitere Wechselvorrichtungen an dem Fahrzeug vorzusehen.

Besonders vorteilhaft ist es, wenn der Spürarm einen Reinbereich aufweist, der von einer Schutzhülle umgeben ist, wobei die Schutzhülle mittels einer Greifeinrichtung des Spürarms entfernt wird und/oder wobei die Schutzhülle mittels eines Gasdruckstoßes entfernt wird. Es wird somit ermöglicht, dass der Einweg-Spürarm sich selbsttätig für den nächsten Spürvorgang vorbereitet. Die Verwendung des Spürarms zum Spüren kann erfolgen, ohne dass die Schutzhülle durch eine weitere Vorrichtung oder manuell entfernt werden müsste.

Nachfolgend sollen anhand der beigefügten Zeichnungen eines Ausführungsbeispiels weitere Vorteile und Einzelheiten der Erfindung erläutert werden. Darin zeigen:
- Fig. 1: einen Teil eines Fahrzeugs mit einer Spürvorrichtung in perspektivischer Ansicht,
- Fig. 2: ein Magazin mit mehreren Einweg-Spürarmen in schematischer Darstellung, und
- Fig. 3: einen Einweg-Spürarm in schematischer Darstellung.

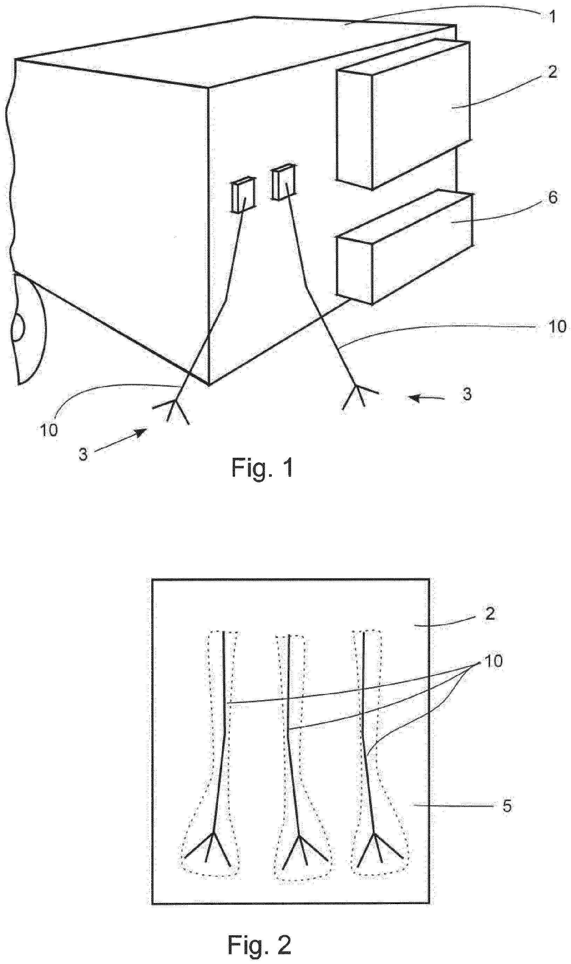

Fig. 1 zeigt in schematischer Ansicht den Heckbereich eines als Spürfahrzeug ausgebildeten militärischen Fahrzeugs 1. Derartige Spürfahrzeuge 1 werden vor allem im militärischen Bereich eingesetzt, um möglicherweise kontaminierte Gebiete auf das Vorhandensein von Schad- oder Kampfstoffen hin zu untersuchen.

Das Fahrzeug 1 weist eine an der Außenkontur des Fahrzeugs 1 angeordnete Spürvorrichtung 3 auf, die aus einem geschützten Innenraum des Fahrzeugs 1 heraus bedient werden kann, welcher zum Schutz der Fahrzeugbesatzung derart abgedichtet ist, dass beispielsweise biologische oder chemische Kampfstoffe nicht eindringen können.

Die Spürvorrichtung 3 weist als ganz wesentliches Element einen bewegbaren Spürarm 10 nach Art eines Greifarms auf, über welchen Materialproben aus der Fahrzeugumgebung aufgenommen werden können.

Da bei der Handhabung dekontaminierter Proben grundsätzlich das Risiko besteht, dass Rückstände an dem Spürarm 10 verbleiben, welche die Ergebnisse nachfolgender Spürvorgänge verfälschen können, sind bei der Spürvorrichtung 3 und insbesondere deren Spürarm 10 besondere Maßnahmen gegen Verfälschungen getroffen. Wie nachfolgend noch näher erläutert werden wird, ist der Spürarm 10 als auswechselbarer Einweg-Spürarm 10 ausgebildet, der jeweils nur für einen einzigen Spürvorgang verwendet und anschließend gegen einen neuen Spürarm 10 ersetzt wird. Durch die Verwendung solcher Einweg-Spürarme 10 können aufeinanderfolgende Spürvorgänge jeweils mit einem neuwertigen, nicht kontaminierten Spürarm 10 durchgeführt werden.

Wie der Abbildung in Fig. 1 ferner zu entnehmen ist, weist das Fahrzeug 1 insgesamt zwei Spürvorrichtungen 3 auf, die wahlweise abwechselnd oder gleichzeitig verwendet werden können.

An der Außenkontur des Fahrzeugs 1 ist ferner ein Magazin 2 angeordnet, in welchem mehrere Einweg-Spürarme 10 gelagert werden. Die Darstellung in Fig. 2 zeigt eine schematisierte Ansicht eines solchen Magazins 2 mit insgesamt drei Einweg-Spürarmen 10. In dem Magazin 2 befindet sich eine Einlage 5, welche beispielsweise aus einem Schaumstoff ausgebildet sein kann. Die Einweg-Spürarme 10 sind in dem Magazin 2 derart angeordnet, dass sie automatisch aus dem Magazin 2 entnommen und an der Spürvorrichtung 3 angeordnet werden können.

Zum automatischen Wechseln der Einweg-Spürarme 10 weist das Fahrzeug 1 eine Wechselvorrichtung auf. Diese kann als in den Figuren nicht dargestellte separate Wechselvorrichtung ausgebildet sein, beispielsweise nach Art eines Roboterarms, welcher an der Außenkontur des Fahrzeugs 1 angeordnet ist und dort durchgehend verbleibt. Beim Ausführungsbeispiel wird die Wechselvorrichtung zum Wechseln eines Einweg-Greifarms 10 einer Spürvorrichtung 3 jeweils durch die andere der beiden Spürvorrichtungen 3 gebildet. Auf diese Weise kann der Einweg-Spürarm 10 der einen Spürvorrichtung 3 durch den Einweg-Spürarm 10 der anderen Spürvorrichtung 3 ausgewechselt werden,wie weiter unten näher erläutert werden soll.

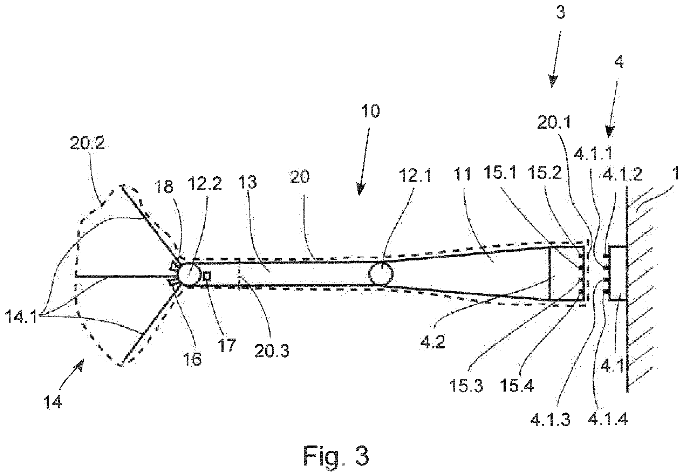

Zunächst soll der Aufbau einer Spürvorrichtung 3 anhand der Darstellung in Fig. 3 näher erläutert werden.

Die Spürvorrichtung 3 weist fahrzeugseitig eine Schnittstelle 4 auf, über welche der Spürarm 10 an das Fahrzeug 1 austauschbar angebunden werden kann.

Die Schnittstelle 4 weist hierzu eine Spürarmaufnahme 4.1 auf, in welcher ein Anschlussstück 4.2 des Einweg-Spürarms 10 aufgenommen werden kann. Die Spürarmaufnahme 4.1 ist als elektromagnetische Aufnahme mit einem Elektromagneten ausgebildet, über welchen bei Bestromung eine anziehende magnetische Kraft auf das Anschlussstück 4.2 des Spürarms 10 bewirkt werden kann, so dass ein sicherer Halt des Einweg-Spürarms 10 an dem Fahrzeug 1 erreicht wird.

Alternativ kann die Anbindung des Spürarms 10 über eine Schnittstelle 4 erfolgen, die eine Schnellspannvorrichtung aufweist. Eine derartige Schnellspannvorrichtung kann einen an einem Exzenter angebundenen Hebel aufweisen, über welchen ein Verriegeln des Einweg-Spürarms 10 an dem Fahrzeug 1 ebenfalls ohne Zuhilfenahme zusätzlichen Werkzeugs ermöglicht wird.

Im Bereich der Schnittstelle 4 sind spürarmseitig buchsenförmige Mittel 15.1, 15.2, 15.3. 15.4 zur Versorgung und Steuerung des Spürarms 10 vorgesehen, die mit im Bereich der Spürarmaufnahme 4.1 vorgesehenen fahrzeugseitigen Mitteln 4.1.1, 4.1.2, 4.1.3, 4.1.4 korrespondieren. Die fahrzeugseitigen Mittel 4.1.1, 4.1.2, 4.1.3, 4.1.4 sind steckerartig ausgebildet und treten beim Einsetzen des Spürarms 10 in die Aufnahme 4.1 unter Bildung einer Steckverbindung in die buchsenförmigen Mittel 15.1, 15.2, 15.3. 15.4 ein.

Das Mittel 15.3 ist als Stromanschlussbuchse ausgebildet, über welche die elektrische Versorgung des gesamten Spürarms 10 erfolgen kann. Zur Steuerung des Spürarms 10 aus dem Fahrzeuginneren hinaus ist das Mittel 15.1 als Steuerungsanschlussbuchse ausgebildet. Darüber hinaus sind Mittel 15.2, 15.4 zur Versorgung des Spürarms mit einem Gas und einer Flüssigkeit an der Schnittstelle 4 vorgesehen. Diese Mittel 15.2, 15.4 sind als Dekontaminationsmittelanschlussbuchse 15.2 bzw. Gasanschlussbuchse 15.4 ausgestaltet.

Der Einweg-Spürarm 10 weist neben dem Anschlussstück 4.2 einen fest mit dem Anschlussstück 4.2 verbundenen Ausleger 11 auf. An dem Ausleger 11 ist über ein Gelenk 12.1 ein bewegbares Glied 13 angelenkt. Das bewegbare Glied 13 ist über ein weiteres Gelenk 12.2 mit einer Greifeinrichtung 14 verbunden, welche mehrere Finger 14.1 aufweist, die aus dem Innenraum des Fahrzeugs 1 über den Steuerungsanschluss 15.1 des Einweg-Spürarms 10 gesteuert werden können. Durch Betätigung der Greifeinrichtung 14 können Materialproben aus dem Umfeld des Fahrzeugs 1, beispielsweise vom Boden, aufgenommen werden. Ferner sind an dem Spürarm 10 als Elektromotoren ausgebildete Antriebe vorgesehen, über welche das bewegbare Glied 13 gegenüber dem Ausleger und die Greifeinrichtung 14 gegenüber dem Glied 13 bewegt werden kann.

Darüber hinaus ist an dem Einweg-Spürarm 10 ein Sensor 18 angeordnet, der beispielsweise als Gassensor ausgebildet sein kann. Der Sensor 18 ist im Bereich des Handgelenks 12.2 des Spürarms 10 angeordnet. Über den Sensor 18 können Messungen an der Umgebungsluft des Fahrzeugs 1 vorgenommen werden, so dass Kontaminationen in der Luft unmittelbar festgestellt werden können.

Auch kann der Einweg-Greifarm 10 eine Sonde aufweisen, über welche verdampfte Materialproben aufgenommen werden können. Hierzu kann die Sonde an das zu verdampfende Material herangeführt werden und vor Ort verdampft werden. In diesem Fall ist es erforderlich, im Bereich der Schnittstelle 4 ein Mittel zur Weiterleitung des verdampften Materials, beispielsweise in Form einer Rohrverbindung, vorzusehen, so dass das verdampfte Material von dem Einweg-Spürarm 10 zu einem Auswertegerät geleitet werden kann.

Im Bereich der Greifeinrichtung 14 ist an dem Einweg-Spürarm 10 ferner ein als Düse ausgebildeter Auslass 16 für Druckluft vorgesehen. Auch der Auslass 16 ist im bereich des handgelenks 12.2 des Spürarms 10 angeordnet. Die Druckluft kann über den Gasanschluss 15.4 in den Einweg-Spürarm 10 eingeleitet werden. Über die Düse 16 ist es beispielsweise möglich, staubförmige Partikel aufzuwirbeln, so dass eine Messung der Partikel mit dem Sensor 18 durchgeführt werden kann. Alternativ kann über den Auslass 16 ein anderes Gas, z. B. Stickstoff oder eine Mischung mehrerer Gase abgegeben werden.

Darüber hinaus ist an dem Einweg-Spürarm 10 ein weiterer Auslass 17 vorgesehen, welcher ebenfalls im Bereich des Handgelenks 12.2 angeordnet und als Sprühkopf ausgebildet ist. Dieser Sprühkopf 17 ist mit dem Dekontaminationsmittelanschluss 15.2 verbunden, so dass über den Sprühkopf 17 eine Flüssigkeit zur Dekontamination von Gegenständen aus dem Einweg-Spürarm 10 ausgesprüht werden kann.

Wie der Darstellung in Fig. 3 ferner zu entnehmen ist, sind die in dem Magazin 2 bevorrateten Einweg-Spürarme 10 von einer Schutzhülle 20 umschlossen, welche vor dem Gebrauch der Einweg-Spürarme 10 entfernt werden muss. Durch die Schutzhülle 20 wird sichergestellt, dass die Spürarme 10 vor ihrer Verwendung nicht verschmutzt oder kontaminiert werden, so dass für jeden Spürvorgang ein frischer Spürarm 10 verwendet wird.

Die Schutzhülle 20 weist zwei Abschnitte 20.1, 20.2 auf. Der erste Schutzhüllenabschnitt 20.1 ist im Bereich der Schnittstelle 4 angeordnet und überdeckt das Anschlussstück 4.2. Die Schutzhülle 20 deckt die Öffnungen der buchsenförmigen Anschlüsse 15.1 bis 15.4 vollständig ab, wodurch verhindert wird, dass irgendwelche Kontaminationen in die Anschlüsse 15.1 bis 15.4 eindringen können. Beim Ausführungsbeispiel ist der Abschnitt 20.1 der Schutzhülle 20 als Klebefolie ausgebildet, die auf die stirnseitige Kontaktfläche des Anschlussstücks 4.2 aufgeklebt wird. Beim Anbinden des Einweg-Spürarms 10 an das Fahrzeug 1 durch Verbinden des Anschlussstücks 4.2 mit der Spürarmaufnahme 4.1 wird die Schutzhülle 20 durch die steckerförmigen Anschlüsse 4.1.1 bis 4.1.4 durchstochen.

Die Schutzhülle 20 ist als Vollverpackung des Einweg-Spürarms 10 ausgebildet und umgibt den gesamten Spürarm 10. Hierdurch wird innerhalb der Schutzhülle 20 ein Reinbereich gebildet, welcher vor äußeren Kontaminationen geschützt ist. In diesem Reinbereich befinden sich auch die vorstehend beschriebene Greifeinrichtung 14, sowie die Düse 16 und der Sensor 18. Bevor die Greifeinrichtung 14, die Düse 16 und der Sensor 18 verwendet werden können, ist es erforderlich, die Schutzhülle 20 zumindest teilweise zu entfernen. Um zu erreichen, dass die Schutzhülle 20 zumindest im Bereich 20.2 der Greifeinrichtung 14 sowie des Auslasses 16 und des Sensors 18 entfernt wird, ist an der Schutzhülle 20 eine Sollbruchstelle 20.3 vorgesehen, welche sich im Bereich des bewegbaren Glieds 13 befindet und bei Beanspruchung bevorzugt aufreißt.

Die Vorgänge beim Betrieb der Spürvorrichtungen 20 an dem Fahrzeug 1 sollen nachfolgend kurz beschrieben werden.

Vor dem Einsatz des Fahrzeugs 1 wird zunächst mindestens ein Spürarm 10 in eine der beiden Spürarmaufnahmen 4.1 des Fahrzeugs 1 eingesetzt. Wahlweise können auch beide Spürarmaufnahmen 4.1 mit einem Spürarm 10 bestückt werden.

In dem möglicherweise kontaminierten Gebiet können dann mit einem Spürarm 10 Spürungen beispielsweise am Boden vorgenommen werden. Hierzu kann der Sensor 18 des Spürarms 10 Verwendung finden. Ferner ist es möglich, Materialproben mit der Greifeinrichtung 14 des Spürarms 10 aufzunehmen und zu einem weiteren Sensor des Fahrzeugs 1 zu verbringen.

Der Einweg-Spürarm 10 kann mittels einer Bedienvorrichtung aus dem ABCgeschützten Inneren des Fahrzeugs 1 bedient werden. Hierbei ist es möglich, die Greifeinrichtung 14 und die Gelenke 12.1, 12.2 des Spürarms 10 gezielt anzusteuern, die Abgabe von Gasen oder Flüssigkeiten über eine der Auslässe 16, 17 zu veranlassen oder Messungen mit dem Sensor 18 vorzunehmen, wodurch dich eine Vielzahl unterschiedlicher Spürungen durchführen lassen.

Nach Abschluss des Spürvorgangs wird der nächste Einweg-Spürarm 10, mit welchem der nächste Spürvorgang durchgeführt werden soll, in die Aufnahme 4.1 eingesetzt und ein dort befindlicher Spürarm 10 ggf. entfernt. Hierzu kommt jener Spürarm 10 zum Einsatz, der die letzte Spürung durchgeführt hatte. Mittels der Greifeinrichtung 14 dieses Spürarms 10 wird der andere Spürarm 10 ergriffen und aus der Spürarmaufnahme 4.1 entfernt. Der von der Spürarmaufnahme 4.1 getrennte Spürarm 10 kann daraufhin abgeworfen werden.

Alternativ kann der bereits verwendete Spürarm 10 in einen Sammelbehälter 6 an der Außenkontur des Fahrzeugs 1 eingebracht werden, vgl. Fig. 1.

Daraufhin kann ein weiterer Einweg-Spürarm 10 aus dem Magazin 2 entnommen werden. Hierbei wird der Einweg-Spürarm 10 aus einer Magazinstellung, in welcher der Spürarm 10 in dem Magazin 2 angeordnet ist, in eine Spürstellung überführt, in welcher der Spürarm 10 zum Spüren verwendbar ist. Der aus dem Magazin 2 entnommene Spürarm 10 wird in die Spürarmaufnahme 4.1 des Fahrzeugs 1 eingesetzt. Somit wird es ermöglicht, dass ein Spürarm 10 einer Spürvorrichtung 3 mittels eines anderen Spürarms 10 einer anderen Spürvorrichtung 3 ausgetauscht wird. Eine separate Wechselvorrichtung ist nicht erforderlich.

Beim Einsetzen des Einwegspürarms 10 in die Spürarmaufnahme 4.1 wird die Schutzhülle 20 im Bereich 20.1 der Schnittstelle 4 durch die Mittel 4.1.1 bis 4.1.4 durchtrennt. Ferner wird die Schutzhülle 20 im Bereich des Greifers 14 entfernt, indem die Finger 14.1 der Greifeinrichtung 14 gespreizt werden. Hierbei bricht die Schutzhülle 20 an der Sollbruchstelle 20.3 auf und fällt von dem Einweg-Spürarm 10 ab, so dass der Bereich der Greifeinrichtung 14 nunmehr frei liegt. Alternativ oder auch zusätzlich kann die Schutzhülle 20 durch einen Gasdruckstoß entfernt werden, welcher über den als Düse ausgebildeten Auslass 16 abgegeben wird. Auch hierbei reißt die Schutzhülle 20 im Bereich der Sollbruchstelle 20.3 auf.

Der neu eingesetzte Einweg-Spürarm 10 ist frei von irgendwelchen die Messergebnisse verfälschenden Kontaminationen und kann nunmehr zur Durchführung des nächsten Spürvorgangs verwendet werden.

Das vorstehend beschriebene Fahrzeug 1 sowie die Spürvorrichtung 3 weisen einen Spürarm 10 auf, welcher als Einweg-Spürarm ausgebildet ist. Auf diese Weise kann ein Spürarm 10 bereitgestellt werden, welcher frei von Schadstoffen sowie Rückständen vorhergehender Spürvorgänge ist, so dass Messverfälschungen aufgrund von Kontaminationen vorhergehenden Spürvorgänge nicht möglich sind.

### Bezugszeichen:

- 1: Fahrzeug
- 2: Magazin
- 3: Spürvorrichtung
- 4: Schnittstelle
- 4.1: Spürarmaufnahme
- 4.1.1: Steuerungsanschlussstecker
- 4.1.2: Dekontaminationsmittelanschlussstecker
- 4.1.3: Stromanschlussstecker
- 4.1.4: Gasanschlussstecker
- 4.2: Anschlussstück
- 5: Einlage
- 6: Sammelbehälter
- 10: Einweg-Spürarm
- 11: Ausleger
- 12.1: Gelenk
- 12.2: Gelenk
- 13: Bewegbares Glied
- 14: Greifeinrichtung
- 14.1: Finger
- 15.1: Steuerungsanschlussbuchse
- 15.2: Dekontaminationsmittelanschlussbuchse
- 15.3: Stromanschlussbuchse
- 15.4: Gasanschlussbuchse
- 16: Gasauslass
- 17: Flüssigkeitsauslass
- 18: Sensor
- 20: Schutzhülle
- 20.1: Schutzhüllenabschnitt
- 20.2: Schutzhüllenabschnitt
- 20.3: Sollbruchstelle

## Patentansprüche

1. Spürvorrichtung zur Anordnung an einem Fahrzeug (1) mit einem bewegbaren Spürarm (10), wobei der Spürarm (10) als Einweg-Spürarm ausgebildet ist und eine Schnittstelle (4) zur austauschbaren Anbindung des Spürarms (10) an das Fahrzeug (1) aufweist,
**dadurch gekennzeichnet,**
**dass** der Spürarm (10) im Bereich der Schnittstelle (4) eine Schutzhülle (20) aufweist, die derart ausgebildet ist, dass sie beim Anbinden des Spürarms (10) durchtrennt wird.

2. Spürvorrichtung nach Anspruch 1, **dadurch gekennzeichnet, dass** der Spürarm (10) einen Reinbereich aufweist, der von einer Schutzhülle (20) umgeben ist.

3. Spürvorrichtung nach einem der vorhergehenden Ansprüche, **dadurch gekennzeichnet, dass** der Spürarm (10) eine Greifeinrichtung (14) zum Greifen von Spürproben aufweist.

4. Spürvorrichtung nach Anspruch 3, **dadurch gekennzeichnet, dass** die Greifeinrichtung (14) im Reinbereich des Spürarms (10) angeordnet ist.

5. Spürvorrichtung nach einem der vorhergehenden Ansprüche, **dadurch gekennzeichnet, dass** der Spürarm (10) einen Sensor (18) und/oder eine Sonde zur Detektion von Kontaminationen aufweist.

6. Spürvorrichtung nach einem der vorhergehenden Ansprüche, **dadurch gekennzeichnet, dass** der Spürarm (10) einen Auslass (16) aufweist, über welchen ein Gasdruckstoß abgebbar ist, und/oder dass der Spürarm (10) einen Auslass (17) aufweist, über welchen ein Dekontaminationsmittel abgebbar ist.

7. Fahrzeug mit einer Spürvorrichtung (3), die einen bewegbaren Spürarm (10) aufweist,
**dadurch gekennzeichnet,**
**dass** die Spürvorrichtung (3) nach einem der vorhergehenden Ansprüche ausgebildet ist.

8. Fahrzeug nach Anspruch 7, **gekennzeichnet durch** ein an der Außenkontur des Fahrzeugs (1) angeordnetes Magazin (2) zur Lagerung mehrerer Spürarme (10).

9. Fahrzeug nach einem der Ansprüche 7 oder 8, **gekennzeichnet durch** eine Wechselvorrichtung zum Wechseln des Spürarms (10).

10. Verfahren zum Betrieb einer an einem Fahrzeug (1) angeordneten Spürvorrichtung (3) mit einem bewegbaren Spürarm (10) und einer Schnittstelle (4) zur austauschbaren Anbindung des Spürarms (10) an das Fahrzeug (1), wobei der Spürarm (10) als Einvveg-Spürarm ausgebildet ist, der gegen einen gleichartigen Einweg-Spürarm ausgewechselt wird (1),
**dadurch gekennzeichnet,**
**dass** der Spürarm (10) im Bereich der Schnittstelle (4) eine Schutzhülle (20) aufweist, die beim Anbinden des Spürarms (10) durchtrennt wird.

11. Verfahren nach Anspruch 10, **dadurch gekennzeichnet, dass** der Spürarm (10) aus einer Magazinstellung, in welcher der Spürarm (10) in einem Magazin (2) angeordnet ist, in eine Spürstellung überführt wird, in welcher der Spürarm (10) zum Spüren verwendbar ist.

12. Verfahren nach einem der Ansprüche 10 oder 11, **dadurch gekennzeichnet, dass** das Fahrzeug (1) zwei Spürvorrichtungen aufweist, wobei ein Spürarm (10) einer ersten Spürvorrichtung (3) mittels des Spürarms (10) einer zweiten Spürvorrichtung (3) ausgetauscht wird.

13. Verfahren nach einem der Ansprüche 10 bis 12, **dadurch gekennzeichnet, dass** der Spürarm (10) einen Reinbereich aufweist, der von einer Schutzhülle (20) umgeben ist, wobei die Schutzhülle (20) mittels einer Greifeinrichtung (14) des Spürarms (10) entfernt wird oder wobei die Schutzhülle (20) mittels eines Gasdruckstoßes entfernt wird.

## Claims

1. Sensing device for arrangement on a vehicle (1), with a moveable sensing arm (10), wherein the sensing arm (10) is designed as a disposable sensing arm and has an interface (4) for the interchangeable connection of the sensing arm (10) to the vehicle (1), **characterized in that** the sensing arm (10) in the region of the interface (4) has a protective casing (20) which is designed in such a manner that it is severed during the connection of the sensing arm (10).

2. Sensing device according to Claim 1, **characterized in that** the sensing arm (10) has a clean region which is surrounded by a protective casing (20).

3. Sensing device according to either of the preceding claims, **characterized in that** the sensing arm (10) has a gripping device (14) for gripping sensing samples.

4. Sensing device according to Claim 3, **characterized in that** the gripping device (14) is arranged in the clean region of the sensing arm (10).

5. Sensing device according to one of the preceding claims, **characterized in that** the sensing arm (10) has a sensor (18) and/or a probe for detecting contaminations.

6. Sensing device according to one of the preceding claims, **characterized in that** the sensing arm (10) has an outlet (16) via which a gas pressure surge can be output, and/or **in that** the sensing arm (10) has an outlet (17) via which a decontamination agent can be output.

7. Vehicle with a sensing device (3) which has a moveable sensing arm (10), **characterized in that** the sensing device (3) is designed according to one of the preceding claims.

8. Vehicle according to Claim 7, **characterized by** a magazine (2) arranged on the outer contour of the vehicle (1) for storing a plurality of sensing arms (10).

9. Vehicle according to either of Claims 7 or 8, **characterized by** an exchanging device for exchanging the sensing arm (10).

10. Method for operating a sensing device (3) arranged on a vehicle (1), with a moveable sensing arm (10) and an interface (4) for the interchangeable connection of the sensing arm (10) to the vehicle (1), wherein the sensing arm (10) is designed as a disposable sensing arm which is exchanged (1) for an identical disposable sensing arm, **characterized in that** the sensing arm (10) in the region of the interface (4) has a protective casing (20) which is severed during the connection of the sensing arm (10).

11. Method according to Claim 10, **characterized in that** the sensing arm (10) is transferred from a magazine position in which the sensing arm (10) is arranged in a magazine (2) into a sensing position in which the sensing arm (10) is useable for sensing.

12. Method according to either of Claims 10 or 11, **characterized in that** the vehicle (1) has two sensing devices, wherein a sensing arm (10) of a first sensing device (3) is replaced by means of the sensing arm (10) of a second sensing device (3).

13. Method according to one of Claims 10 to 12, **characterized in that** the sensing arm (10) has a clean region which is surrounded by a protective casing (20), wherein the protective casing (20) is removed by means of a gripping device (14) of the sensing arm (10), or wherein the protective casing (20) is removed by means of a gas pressure surge.

## Revendications

1. Dispositif de détection à agencer au niveau d'un véhicule (1) avec un bras de détection (10) mobile, le bras de détection (10) étant réalisé sous la forme d'un bras de détection jetable et comportant une interface (4) pour raccorder de façon amovible le bras de détection (10) au véhicule (1), **caractérisé en ce que** le bras de détection (10) comporte dans la région de l'interface (4) une enveloppe de protection (20) réalisée de telle sorte qu'elle est coupée lors du raccordement du bras de détection (10).

2. Dispositif de détection selon la revendication 1, **caractérisé en ce que** le bras de détection (10) comporte une région stérile entourée par une enveloppe de protection (20).

3. Dispositif de détection selon l'une quelconque des revendications précédentes, **caractérisé en ce que** le bras de détection n (10) comporte un dispositif de préhension (14) pour saisir des échantillons de détection.

4. Dispositif de détection selon la revendication 3, **caractérisé en ce que** le dispositif de préhension (14) est disposé dans la région stérile du bras de détection (10).

5. Dispositif de détection selon l'une quelconque des revendications précédentes, **caractérisé en ce que** le bras de détection (10) comporte un capteur (18) et/ou une sonde pour détecter des contaminations.

6. Dispositif de détection selon l'une quelconque des revendications précédentes, **caractérisé en ce que** le bras de détection (10) comporte une sortie (16) via laquelle un choc de pression de gaz peut être transmis, et/ou que le bras de détection (10) comporte une sortie (17) via laquelle un moyen de décontamination peut être transmis.

7. Véhicule avec un dispositif de détection (3) comportant un bras de détection (10) mobile, **caractérisé en ce que** le dispositif de détection (3) est réalisé selon l'une quelconque des revendications précédentes.

8. Véhicule selon la revendication 7, **caractérisé par** un magasin (2) disposé au niveau du contour extérieur du véhicule (1) pour le positionnement de plusieurs bras de détection (10).

9. Véhicule selon l'une quelconque des revendications 7 ou 8, **caractérisé par** un dispositif d'échange pour échanger le bras de détection (10).

10. Procédé d'utilisation d'un dispositif de détection (3) disposé au niveau d'un véhicule (1) avec un bras de détection (10) mobile et une interface (4) pour raccorder de façon amovible le bras de détection (10) au véhicule (1), le bras de détection (10) étant réalisé sous la forme d'un bras de détection jetable pouvant être remplacé par un bras de détection jetable de même type (1), **caractérisé en ce que** le bras de détection (10) comporte dans la région de l'interface (4) une enveloppe de protection (20) coupée lors du raccordement du bras de détection (10).

11. Procédé selon la revendication 10, **caractérisé en ce que** le bras de détection (10) est transféré d'une position de magasin dans laquelle le bras de détection (10) est disposé dans un magasin (2) jusque dans une position de détection dans laquelle le bras de détection (10) peut être utilisé pour réaliser une détection.

12. Procédé selon l'une quelconque des revendications 10 ou 11, **caractérisé en ce que** le véhicule (1) comporte deux dispositifs de détection, un bras de détection (10) d'un premier dispositif de détection (3) étant remplacé à l'aide du bras de détection (10) d'un deuxième dispositif de détection (3).

13. Procédé selon l'une quelconque des revendications 10 à 12, **caractérisé en ce que** le bras de détection (10) comporte une région stérile entourée par une enveloppe de protection (20), l'enveloppe de protection (20) étant écartée au moyen d'un dispositif de préhension (14) du bras de détection (10) ou l'enveloppe de protection (20) étant écartée à l'aide d'un choc de pression de gaz.
